(19) Europäisches Patentamt
European Patent Office
Office européen des brevets

(11) **EP 4 492 128 A1**

(12) **EUROPEAN PATENT APPLICATION**
published in accordance with Art. 153(4) EPC

(43) Date of publication:
**15.01.2025 Bulletin 2025/03**

(21) Application number: 22931031.3

(22) Date of filing: **07.12.2022**

(51) International Patent Classification (IPC):
**G02C 7/02** (2006.01)     **G02C 7/06** (2006.01)

(52) Cooperative Patent Classification (CPC):
**G02C 7/02; G02C 7/06**

(86) International application number:
**PCT/JP2022/045174**

(87) International publication number:
**WO 2023/171061 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2022  JP 2022034462**

(71) Applicant: **HOYA LENS THAILAND LTD.
Pathumthani 12130 (TH)**

(72) Inventor: **MATSUOKA Shohei
Tokyo 160-8347 (JP)**

(74) Representative: **Betten & Resch
Patent- und Rechtsanwälte PartGmbB
Maximiliansplatz 14
80333 München (DE)**

(54)     **EYEGLASS LENS AND DESIGN METHOD FOR EYEGLASS LENS**

(57)     There is provided an eyeglass lens including a base region that causes light incident on an object-side surface to exit from an eye-side surface, enter an eye, and converge at a predetermined position A on a retina, and a plurality of defocus regions having a characteristic of causing light to converge at a position B farther from an object side than the position A is. Also, $d_1/d_2$ is greater than 2 and less than 3, where $d_1$, which is the diameter of a circle circumscribing a triangle connecting centers of three of the defocus regions closest to each other, is divided by $d_2$, which is the diameter of the defocus regions.

FIG. 4

## Description

TECHNICAL FIELD

The present invention relates to an eyeglass lens and a design method for an eyeglass lens.

DESCRIPTION OF RELATED ART

As one type of eyeglass lens that has a hyperopia reducing function, there is an eyeglass lens in which small recessions having a certain lens power (segment surfaces) are provided in a normal prescribed lens surface (base surface).

For example, Patent Document 1 discloses an eyeglass lens having defocus regions that have an effect of causing light to converge at a position farther from the object side than a position on the retina is (i.e., behind a position A) in the direction of light propagation.

PRIOR ART DOCUMENT

PATENT DOCUMENT

Patent Document 1: WO 2020/067028

SUMMARY

PROBLEM TO BE SOLVED BY DISCLOSURE

An object of one embodiment of the present invention is to provide an eyeglass lens that has a hyperopia reducing function and can suppress false focusing in front of the retina.

MEANS FOR SOLVING PROBLEM

A first aspect of the present invention is an eyeglass lens including:

a base region configured to cause light incident on an object-side surface to exit from an eye-side surface, enter an eye, and converge at a predetermined position A on a retina; and
a plurality of defocus regions having a characteristic of causing light to converge at a position B farther from an object side than the position A is,
wherein $d_1/d_2$ is greater than 2 and less than 3, where $d_1$, which is the diameter of a circle circumscribing a triangle connecting centers of three of the defocus regions closest to each other, is divided by $d_2$, which is the diameter of the defocus regions.

A second aspect of the present invention is the eyeglass lens according to the first aspect, wherein the plurality of defocus regions are spaced apart and not adjacent to each other.

A third aspect of the present invention is the eyeglass lens according to the first or second aspect, further including:
a functional region in which the plurality of defocus regions are arranged in such a manner that the diameters di fall within a range of ±20%.

A fourth aspect of the present invention is the eyeglass lens according to the third aspect, wherein in the functional region, an area ratio of the plurality of defocus regions is 30% or more.

A fifth aspect of the present invention is the eyeglass lens according to any one of the first to fourth aspects, wherein a surface shape of the plurality of defocus regions is a spherical shape.

A sixth aspect of the present invention is the eyeglass lens according to any one of the first to fifth aspects, wherein the eyeglass lens is a hyperopia reducing lens.

A seventh aspect of the present invention is a design method for an eyeglass lens, including the steps of:

designing a base region configured to cause light incident on an object-side surface to exit from an eye-side surface, enter an eye, and converge at a predetermined position A on a retina; and
designing a plurality of defocus regions having a characteristic of causing light to converge at a position B farther from an object side than the position A is,

wherein in the step of designing the plurality of defocus regions, the plurality of defocus regions are designed in such a manner that $d_1/d_2$ is greater than 2 and less than 3, where $d_1$, which is the diameter of a circle circumscribing a triangle connecting centers of three of the defocus regions closest to each other, is divided by $d_2$, which is the diameter of the defocus regions.

## ADVANTAGE OF DISCLOSURE

According to one embodiment of the present invention, it is possible to provide an eyeglass lens that has a hyperopia reducing function and can suppress false focusing in front of the retina.

## BRIEF DESCRIPTION OF DRAWINGS

FIG. 1 is a schematic diagram illustrating the occurrence of false focusing in an eyeglass lens according to a reference example.
FIG. 2 is a graph showing an example of the relationship between contrast (vertical axis) and defocus (horizontal axis) based on a position A, which is obtained by wave optics calculation, in the eyeglass lens according to the reference example.
FIG. 3 is a plan view of the object-side surface of an eyeglass lens 100 according to a first embodiment of the present invention.
FIG. 4 is an example of an enlarged plan view of defocus regions 20 of the eyeglass lens 100 according to the first embodiment of the present invention.
FIG. 5(a) is a diagram showing the arrangement of the defocus regions 20 in Sample 1 according to a working example of the present invention, FIG. 5(b) is a diagram showing the arrangement of the defocus regions 20 in Sample 2 according to a working example of the present invention, FIG. 5(c) is a diagram showing the arrangement of the defocus regions 20 in Sample 3 according to a working example of the present invention, and FIG. 5(d) is a diagram showing the arrangement of the defocus regions 20 in Sample 4 according to a working example of the present invention.

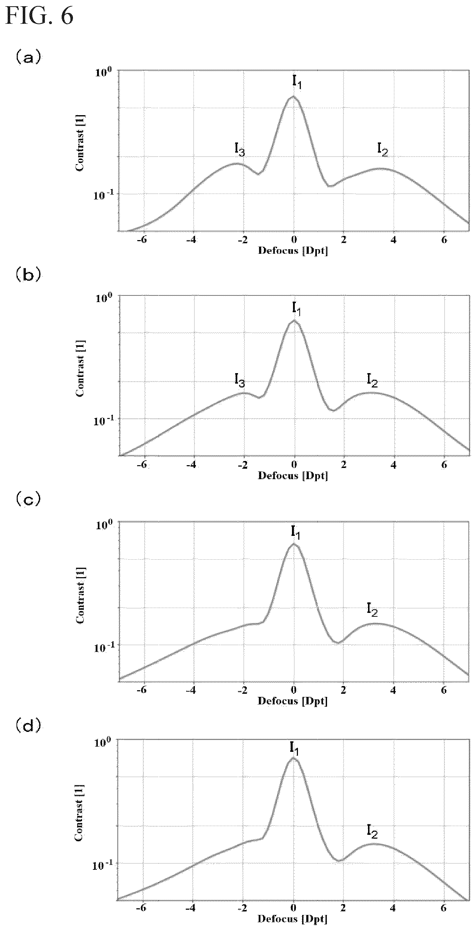

FIG. 6(a) is a graph showing the relationship between contrast and defocus obtained by wave optics calculation in Sample 1 according to a working example of the present invention, FIG. 6(b) is a graph showing the relationship between contrast and defocus obtained by wave optics calculation in Sample 2 according to a working example of the present invention, FIG. 6(c) is a graph showing the relationship between contrast and defocus obtained by wave optics calculation in Sample 3 according to a working example of the present invention, and FIG. 6(d) is a graph showing the relationship between contrast and defocus obtained by wave optics calculation in Sample 4 according to a working example of the present invention.

## DETAILED DESCRIPTION OF THE DISCLOSURE

<Inventor Findings>

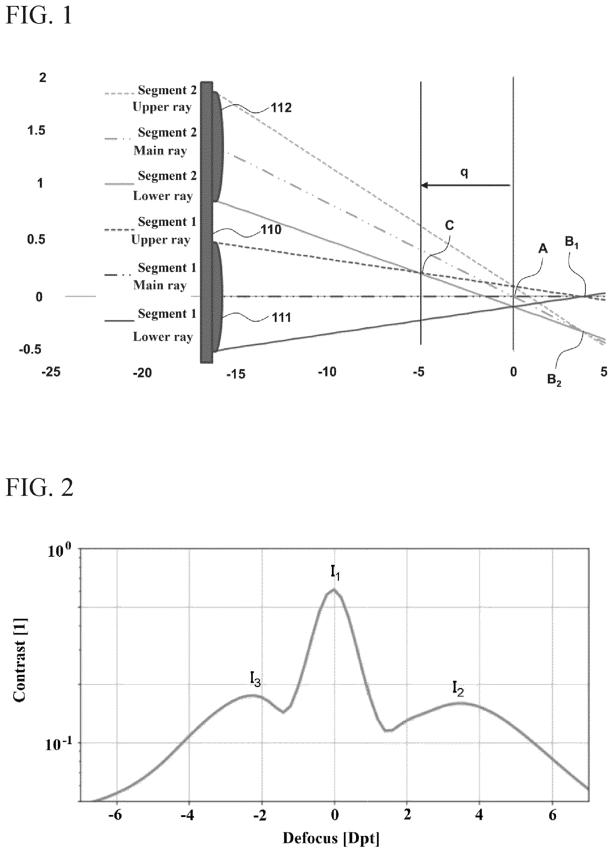

First, findings made by the inventor will be described below. FIG. 1 is a schematic diagram illustrating the occurrence of false focusing in an eyeglass lens according to a reference example. FIG. 1 schematically shows a cross section of a portion of an eyeglass lens. Note that a base surface 110 shown in FIG. 1 generally has a curve corresponding to design specifications, but for simplicity, is shown here as a flat surface. On the horizontal axis in FIG. 1, a specific position on the retina (position A) is denoted by 0, positions behind the retina are indicated by a + sign, and positions in front of the retina are indicated by a - sign. On the vertical axis in FIG. 1, the position A is denoted by 0, higher positions are indicated by a + sign, and lower positions are indicated by a - sign. Note that in this specification, unless otherwise specified, in the following figures as well, positions behind the retina will be represented by a + sign, and positions in front of the retina will be represented by a - sign.

In FIG. 1, the position A is the position where the light passing through the base surface 110 converges. Also, as shown in FIG. 1, the light that passes through a segment surface 111 (Segment 1) converges at a position $B_1$, which is behind the position A on the retina, and the light that passes through a segment surface 112 (Segment 2) similarly converges at a position $B_2$, which is behind the position A on the retina. In this way, it is thought that by providing a segment surface with a negative defocus to provide a spot behind the retina, the stimulation received by the retina is controlled, thereby achieving the effect of reducing hyperopia.

Here, as shown in FIG. 1, a ray passing through the upper end of the segment surface 111 (Segment 1 upper ray) and a ray passing through the lower end of the segment surface 112 (Segment 2 lower ray) intersect at a position C in front of the retina. Therefore, between the retina and the position C, a spot formed by light passing through the segment surface 111 and a spot formed by light passing through the segment surface 112 overlap each other, and false focusing occurs in front of the retina.

FIG. 2 is a graph showing an example of the relationship between contrast (vertical axis) and defocus (horizontal axis) based on the position A, which is obtained by wave optics calculation, in the eyeglass lens according to the reference example. The horizontal axis in FIG. 2 indicates the distance from the retina converted into defocus power. As shown in FIG. 2, it was found that when false focusing occurs, not only is there a main peak $I_1$ on the retina due to the base surface and a peak $I_2$ behind the retina due to the segment surface, but also there is a contrast peak $I_3$ in front of the retina as well. The peak $I_3$ formed by false focusing may hinder the hyperopia reducing effect of the lens, which reduces hyperopia by providing a spot behind the retina to control the stimulation received by the retina. In other words, if the peak $I_3$ formed by false focusing is significant, there is a possibility that the hyperopia reducing effect will not be sufficient.

Note that an index called VSOTF was used in the contrast calculation. VSOTF is a scalar quantity that takes into account contrast sensitivity characteristics thought to be due to the retinal structure or nervous system. VSOTF is the sum of OTF real parts weighted according to the eye's sensitivity characteristics for each spatial frequency. The specific formula is as follows:

[Math 1]

$$VSOTF = \frac{\int_{-\infty}^{+\infty}\int_{-\infty}^{+\infty} CSF(r,s) \cdot Re[OTF(r,s)]\,dr\,ds}{\int_{-\infty}^{+\infty}\int_{-\infty}^{+\infty} CSF(r,s) \cdot OTF_{DL}(r,s)\,dr\,ds}$$

Molecular OTF: Optical Transfer Function (OTF) of an actual lens.
OTFDL in denominator: OTF when lens is assumed to have no aberration.
CSF: Contrast Sensitivity Function for spatial frequency of human vision. CSF has a sensitivity peak at a frequency sufficiently below the cutoff frequency.

OTF is one scale for evaluating lens performance, and is a complex value index that expresses, as a spatial frequency characteristic, the degree to which the contrast of a visually-observed object can be faithfully reproduced on an image plane. A large absolute value of the OTF means that the wearer perceives a high contrast when viewing an object through the lens, and a small deviation angle of the OTF means that positional deviation of the image is small. A high value of VSOTF, which is a weighted sum of OTFs, means that the image has less blur and smearing, and has a high concentration of energy.

VSOTF is described in "Thibos LN, Hong X, Bradley A, Applegate RA. Accuracy and precision of objective refraction from wavefront aberrations. J Vis. 2004 Apr 23;4(4):329-51", and therefore a detailed description will be omitted here.

The inventor of the present invention conducted extensive research into the above-mentioned problems. As a result, it was found that by appropriately controlling the shape, size, arrangement, and the like of segment surfaces, it is possible to prevent a peak formed by false focusing from becoming significant, and to cause such a peak to function as part of the main peak on the retina (to become buried in the main peak). Accordingly, it is possible to substantially suppress the formation of a peak by false focusing, and to effectively obtain the hyperopia reducing effect. Also, by suppressing false focusing, the wearing comfort of the eyeglass lens can be improved.

[Details of Embodiments of Present Invention]

Next, embodiments of the present invention will be described below with reference to the drawings. Note that the present invention is not limited to these examples, but rather is defined by the claims, and is intended to include all modifications within the meaning and scope of the claims.

The eyeglass lens described in this specification has an object-side surface and an eye-side surface. The "object-side surface" is the surface located on the object side when glasses provided with the eyeglass lens are worn by a wearer, and the "eye-side surface" is the surface on the opposite side, that is to say the surface located on the eye side when the glasses provided with the eyeglass lens are worn by the wearer. This relationship also applies to the lens base material that forms the substrate of the eyeglass lens. In other words, the lens base material also has an object-side surface and an eye-side surface.

<First Embodiment of Present Invention>

(1) Eyeglass Lens

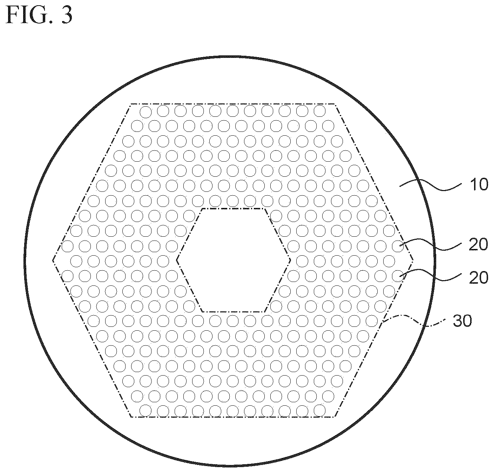

FIG. 3 is a plan view of the object-side surface of an eyeglass lens 100 of the present embodiment. The eyeglass lens 100 of the present embodiment is a hyperopia reducing lens that provides a hyperopia reducing function, and includes a base region 10 and a plurality of defocus regions 20. In the present embodiment, the base region 10 is the region in which the above-mentioned base surface is formed. The base region 10 is a refractive region designed to achieve the prescribed refractive power of the wearer, and is designed to cause light incident on the object-side surface to exit from the eye-side surface, enter the wearer's eye, and converge at a predetermined position on the retina (position A). Also, in the present embodiment, the defocus regions 20 are regions in which the above-mentioned segment surfaces are formed. The defocus regions 20 are configured to have a characteristic of causing light incident on the object-side surface to exit from the eye-side surface, enter the wearer's eye, and converge at a position farther from the object side than the position A is (i.e., converge at a position B behind the position A on the retina).

The base region 10 is a portion having a shape capable of realizing the prescribed refractive power of the wearer, and there are no particular limitations on the surface shape. The base region 10 may have a spherical shape, an aspheric shape, a toric shape, or a combination of such shapes. In the present embodiment, the base region 10 has a spherical shape.

The defocus regions 20 are each a region where at least a part of the region does not focus light at the same light focusing position as the base region 10. The defocus regions 20 of the present embodiment need only be formed on at least either the object-side surface or the eye-side surface of the eyeglass lens 100. In the present embodiment, the case where a plurality of defocus regions 20 are provided only on the object-side surface of the eyeglass lens 100 will be illustrated as an example.

It is preferable that the surface shape of the defocus regions 20 is, for example, a spherical shape. When the defocus region 20 has an aspheric shape, a bright area called a caustic surface may be formed at the outer periphery of the spot, which may increase false focusing. To address this, the surface shape of the defocus regions 20 is a spherical shape, thus making it possible to suppress an increase in false focusing. In the present embodiment, the concept of "the surface shape of the defocus regions 20 is a spherical shape" includes not only the case where the defocus regions 20 are completely spherical, but also the case where the defocus regions 20 have a spherical shape over a range of 90% or more of the diameter thereof. In the present embodiment, the case where the defocus regions 20 are spherical concave surfaces will be illustrated.

The number of defocus regions 20 included in the eyeglass lens 100 is not particularly limited, but is, for example, 20 or more and 500 or less.

In the present embodiment, the defocus regions 20 are arranged, for example, as islands (i.e., spaced apart and not adjacent to each other). It is preferable that the arrangement of the defocus regions 20 has periodicity. This makes it possible to suppress discomfort such as blurring in a specific direction, and improve the wearing comfort of the eyeglass lens 100.

The defocus regions 20 may not be formed in a central region of the eyeglass lens 100 as shown in FIG. 3, or defocus regions 20 may be formed in the central region of the eyeglass lens 100. In this specification, the central region of the eyeglass lens 100 means the lens center (geometric center, optical center, or axial center) of the eyeglass lens 100 and the vicinity thereof. In the present embodiment, the case where the line of sight of the wearer of the eyeglass lens 100 passes through the center of the lens when looking straight ahead will be illustrated.

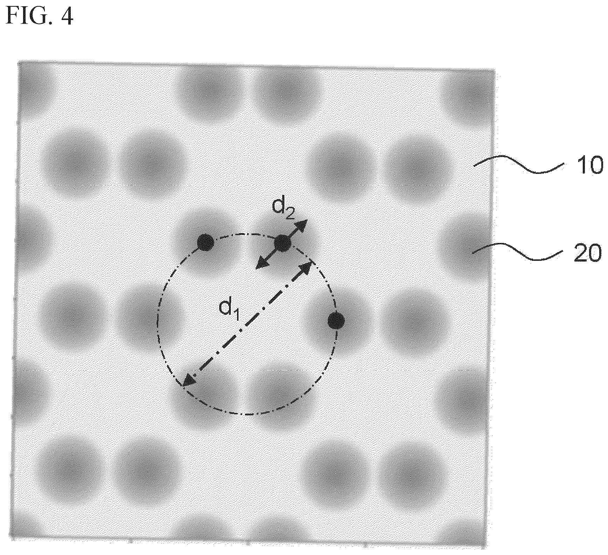

FIG. 4 is an example of an enlarged plan view of the defocus regions 20. Here, as shown in FIG. 4, let di be the diameter of a circle circumscribing a triangle connecting the centers of three defocus regions 20 closest to each other. Also, let $d_2$ be the diameter of the defocus regions 20. When the diameters of the three defocus regions 20 closest to each other are different, $d_2$ may be the average value of the three diameters. When the shape of the defocus regions 20 is not a perfect circle in a plan view due to manufacturing error or the like, $d_2$ may be the diameter of an approximation of the circle. In the present embodiment, "three defocus regions 20 closest to each other" refers to three defocus regions 20 that include a defocus region 20 of interest and were selected so as to minimize the diameter di.

The following describes how the occurrence of false focusing is deeply influenced by the diameter di and the diameter $d_2$ described above. In the following, using Formula 1, an air-equivalent distance x (mm) from the retina is converted into a defocus power X (unit: diopter, Dpt) to make it easier to clarify the relationship with the optical effect. Likewise to the air-equivalent distance x, X is denoted by the + sign when behind the retina and by the - sign when in front of the retina.

$$x = (1000/\text{eye power} - 1000/(\text{eye power} + X)) \quad ...(1)$$

To simplify the description, an example in which false focusing occurs due to two defocus regions 20 will be described. As shown in FIG. 1, false focusing occurs between a defocus point q, where the Segment 1 upper ray and the Segment 2 lower ray intersect, and the retina. To derive q, it is sufficient to find a difference $\Delta y$ between the y coordinates of the Segment 1 upper ray and the Segment 2 lower ray on the retina (x=0), and a difference $\Delta a$ between the slopes of the rays. The difference $\Delta y$ between the y coordinates is expressed by Formula 2 below.

$$\Delta y = \text{diameter } d_2 \times \text{segment power} \div \text{eye power} \quad ...(2)$$

Also, the slope of the Segment 1 upper ray is expressed as "segment radius $\times$ (segment power + eye power)/1000", and the slope of the Segment 2 lower ray is expressed as "-segment interval $\times$ eye power/1000 + segment radius $\times$ (segment power + eye power)/1000", and thus a difference $\Delta a$ is expressed by Formula 3 below. Note that the segment interval in Formula 3 actually corresponds to the diameter $d_1$.

$$\text{Segment interval} \times \text{eye power}/1000 - \text{diameter } d_2 \times (\text{segment power} + \text{eye power})/1000 \quad (3)$$

q can be derived from Formula 4 below.

$$\Delta y + q \times \Delta a = 0 \quad ...(4)$$

Using Formula 1, q is converted to a defocus power Q, and then substituted into Formula 4 to solve for Q, thus yielding Formula 5 below.

$$Q = -\text{segment power} \times \text{diameter } d_2 \div (\text{segment interval} - \text{diameter } d_2) \quad ...(5)$$

In Formula 5, letting the segment interval be the diameter di and letting $d_1/d_2=K$, Formula 6 below is obtained.

$$Q/\text{segment power} = -1/(K-1) \quad ...(6)$$

Therefore, as shown in Formula 6, only K influences the relationship between normal focusing and false focusing.

The inventor of the present invention found that by setting a value K, which is obtained by dividing the diameter di by the diameter $d_2$ ($=d_1/d_2$), to a value greater than 2 and less than 3, it is possible to suppress false focusing in front of the retina. When the value K is 2 or less, a contrast peak formed by false focusing becomes significant, and there is a possibility that the hyperopia reducing effect will not be sufficiently obtained. In contrast, by setting the value K to a value greater than 2, the peak formed by false focusing can be caused to function as part of the main peak on the retina (to become buried in the main peak), thereby making it possible to substantially suppress the formation of a peak by false focusing and efficiently achieve the hyperopia reducing effect. Also, by suppressing false focusing, the number of peaks not on the retina is reduced, thus making it possible to improve the wearing comfort of the eyeglass lens 100. On the other hand, when the value K is a value of 3 or more, the ratio of the area of the defocus regions 20 to the area of the base region 10 decreases, and thus there is a possibility that the hyperopia reducing effect cannot be sufficiently obtained. In contrast to this, by setting the value K to a value less than 3, it is possible to ensure that the area ratio of the defocus regions 20 is a predetermined value or more, thus making it possible to efficiently obtain the hyperopia reducing effect.

It is more preferable that the value K is, for example, greater than 2.2 and less than 2.5. By setting the value K to a value greater than 2.2, the position of the peak formed by false focusing is brought closer to the main peak on the retina, thus making it possible to improve the contrast of the main peak. Moreover, by setting the value K to a value less than 2.5, it is possible to ensure a larger area ratio of the defocus regions 20, thus making it possible to improve the hyperopia reducing effect.

As shown in FIG. 3, it is preferable that the eyeglass lens 100 of the present embodiment has a functional region 30. The functional region 30 is a region in which the defocus regions 20 are arranged in such a manner that the diameters di fall within a range of $\pm20\%$ (preferably $\pm10\%$). That is to say, the defocus regions 20 are arranged in such a manner that the diameter di when focusing on one defocus region 20 in the functional region 30 falls within a range of $\pm20\%$ of the diameter di when focusing on another defocus region 20 in the functional region 30. When the defocus regions 20 are arranged in such a manner that the diameters di fall within a range of $\pm20\%$, this indicates that the arrangement of the defocus regions 20 has a certain degree of periodicity. Therefore, by providing the functional region 30, discomfort such as blurring in a specific direction can be suppressed, and the wearing comfort of the eyeglass lens 100 can be improved.

On the other hand, it can also be said that the functional region 30 is a region where false focusing can easily occur due to the arrangement of the defocus regions 20 having a certain degree of periodicity. However, in the present embodiment, the value K is controlled as described above, thus making it possible to suppress false focusing while also improving the wearing comfort of the eyeglass lens 100.

Note that although the defocus regions 20 may be disposed in a region other than the functional region 30, from the viewpoint of improving the wearing comfort of the eyeglass lens 100, it is preferable that, for example, 80% or more (more preferably 90% or more) of all the defocus regions 20 provided in the eyeglass lens 100 are disposed in the functional region 30.

It is preferable that the functional region 30 occupies, for example, 50% or more of the area within a circle having a diameter of 20 mm from the lens center of the eyeglass lens 100. Here, "within a circle having a diameter of 20 mm from the lens center" is based on the assumption of "within the range of everyday visual behavior". This makes it possible to improve the wearing comfort of the eyeglass lens 100 while also efficiently obtaining the hyperopia reducing effect.

It is preferable that in the functional region 30, the area ratio of the defocus regions 20 is, for example, 30% or more and 60% or less (more preferably 40% or more and 60% or less). When the area ratio of the defocus regions 20 is less than 30%, there is a possibility that the hyperopia reducing effect cannot be sufficiently obtained. In contrast, by setting the area ratio of the defocus regions 20 to 30% or more, it is possible to sufficiently obtain the hyperopia reducing effect. On the other hand, when the area ratio of the defocus regions 20 exceeds 60%, the wearing comfort and appearance of the eyeglass lens 100 may be adversely affected. In contrast, by setting the area ratio of the defocus regions 20 to 60% or less, the wearing comfort and appearance of the eyeglass lens 100 can be maintained.

Note that it is not necessary that the value K is greater than 2 and less than 3 for all of the defocus regions 20. From the viewpoint of efficiently suppressing false focusing, it is preferable that, for example, the value K is greater than 2 and less than 3 for 80% or more (more preferably 90% or more) of the defocus regions 20 disposed in the functional region 30 (or all the defocus regions 20 provided in the eyeglass lens 100).

Various commonly used lens base materials can be used as the lens base material constituting the eyeglass lens 100. The lens base material may be, for example, a plastic lens base material or a glass lens base material. The glass lens base material may be, for example, a lens base material made of inorganic glass. As the lens base material, a plastic lens base material is preferable from the viewpoints of being lightweight and less likely to break. Examples of the plastic lens base material include styrene resins (such as (meth)acrylic resins), polycarbonate resins, allyl resins, allyl carbonate resins (such as diethylene glycol bisallyl carbonate resin (CR-39)), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and cured products (generally referred to as transparent resins) obtained by curing a curable composition containing a (thio)epoxy compound having one or more disulfide bonds in the molecule. The curable composition may also be referred to as a polymerizable composition. The lens base material may be either an undyed lens base material (colorless lens) or a dyed lens base material (dyed lens). The thickness and the diameter of the lens base material are not particularly limited, but for example, the thickness (center thickness) may be about 1 to 30 mm, and the diameter may be about 50 to 100 mm. The refractive index of the lens base material may be, for example, about 1.60 to 1.75. However, the refractive index of the lens base material is not limited to this range and may be within this range or may be above or below this range. In this specification, the refractive index refers to the refractive index for light with a wavelength of 500 nm.

(2) Design Method and Manufacturing Method for Eyeglass Lens

The present invention is also applicable to a design method and a manufacturing method for the eyeglass lens 100. A design method (manufacturing method) for the eyeglass lens 100 of the present embodiment includes a step of designing the base region 10 that causes light incident on the object-side surface to exit from the eye-side surface, enter the eye, and converge at a predetermined position on the retina (position A), and a step of designing a plurality of the defocus regions 20 having the characteristic of causing light to converge at a position farther from the object side than the position A is (i.e., converge at the position B behind the position A on the retina), wherein in the step of designing the defocus regions 20, the defocus regions 20 are designed in such a manner that the value K ($=d_1/d_2$) is greater than 2 and less than 3, where $d_1$, which is the diameter of a circle circumscribing a triangle connecting centers of three of the defocus regions 20 closest to each other, is divided by $d_2$, which is the diameter of the defocus regions 20. Details of the base region 10 and the defocus regions 20 designed in the steps will be omitted due to being redundant with the description in "(1) Eyeglass Lens" above.

<Other Embodiments of Present Invention>

Although embodiments of the present invention have been specifically described above, the present invention is not limited to the above-described embodiments, and various modifications can be made without departing from the gist of the present invention.

For example, in the above embodiment, a case is described in which a plurality of defocus regions 20 are arranged spaced apart and not adjacent to each other, but it is not necessary that all of the defocus regions 20 are arranged spaced apart and not adj acent to each other. However, when a plurality of defocus regions 20 are arranged adjacent to each other, the wearing comfort of the eyeglass lens 100 may deteriorate, such as a tendency for blurring to occur in the direction in which the defocus regions 20 are adjacent to each other. Therefore, from the viewpoint of improving the wearing comfort of the eyeglass lens 100, it is preferable that, for example, among all of the defocus regions 20 provided in the eyeglass lens 100, 90% or more of the defocus regions 20 are arranged spaced apart and not adjacent to each other, and it is even more preferable that all of the defocus regions 20 arranged in the functional region 30 are arranged spaced apart and not adjacent to each other.

[Working Examples]

Next, working examples according to the present invention will be described. These working examples are merely examples of the present invention, and the present invention is not limited to these working examples.

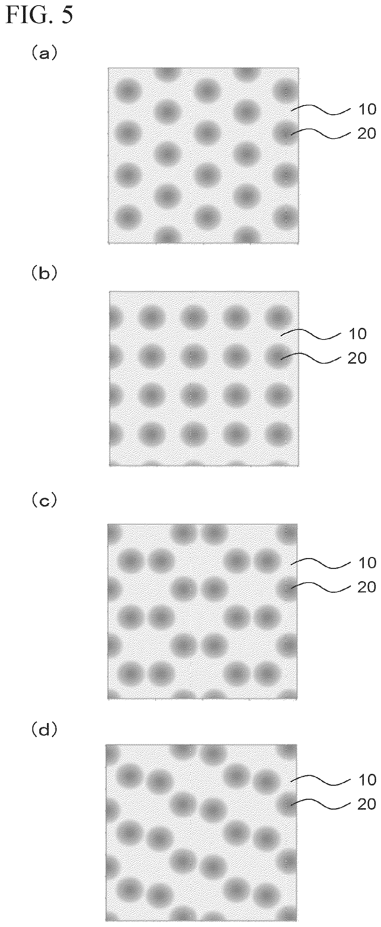

Sample 1 of the eyeglass lens 100 was designed under the following conditions. The base region 10 and the defocus regions 20 have a spherical shape. FIG. 5(a) shows the arrangement of the defocus regions 20 in Sample 1.

Segment power (relative power of defocus region 20 to base region 10): -3.5 D
Area ratio of defocus regions 20: 46%
Diameter di of circle circumscribing triangle connecting centers of three defocus regions 20 closest to each other: 1.67 mm
Diameter $d_2$ of defocus region 20: 1.0 mm
Value K: 1.67

Sample 2 of the eyeglass lens 100 was designed in the same manner as Sample 1, except that the arrangement of the defocus regions 20 was changed, the diameter di was set to 1.91 mm, and the value K was set to 1.91. FIG. 5(b) shows the arrangement of the defocus regions 20 in Sample 2.

Sample 3 of the eyeglass lens 100 was designed in the same manner as Sample 1, except that the arrangement of the defocus regions 20 was changed, the diameter di was set to 2.31 mm, and the value K was set to 2.31. FIG. 5(c) shows the arrangement of the defocus regions 20 in Sample 3.

Sample 4 of the eyeglass lens 100 was designed in the same manner as Sample 1, except that the arrangement of the defocus regions 20 was changed, the diameter di was set to 2.31 mm, and the value K was set to 2.31. FIG. 5(d) shows the arrangement of the defocus regions 20 in Sample 4.

In Samples 1 to 4, the relationship between contrast and defocus was calculated by wave optics calculation. The results for Sample 1 are shown in FIG. 6(a), the results for Sample 2 are shown in FIG. 6(b), the results for Sample 3 are shown in FIG. 6(c), and the results for Sample 4 are shown in FIG. 6(d).

As shown in FIG. 6(a), in Sample 1, in which the value K was set to 2 or less (1.67), the peak $I_3$ caused by false focusing appeared in front of the retina (-2.7 Dpt). Furthermore, as shown in FIG. 6(b), in Sample 2 as well, in which the value K was set to 2 or less (1.91), the peak $I_3$ caused by false focusing appeared in front of the retina (-2.0 Dpt). In contrast, as shown in FIG. 6(c) and FIG. 6(d), in Sample 3 and Sample 4 in which the value K was greater than 2 (2.31), the peak $I_3$ caused by false focusing did not appear in front of the retina. From the above, it was confirmed that by setting the value K to a value greater than 2, the peak $I_3$ caused by false focusing can be buried in the main peak $I_1$ on the retina, and false focusing can be substantially suppressed.

DESCRIPTION OF SIGNS AND NUMERALS

| 10 | Base region |
| 20 | Defocus region |
| 30 | Functional region |
| 100 | Eyeglass lens |
| 110 | Base surface |
| 111, 112 | Segment surface |

**Claims**

1. An eyeglass lens comprising:

   a base region configured to cause light incident on an object-side surface to exit from an eye-side surface, enter an eye, and converge at a predetermined position A on a retina; and
   a plurality of defocus regions having a characteristic of causing light to converge at a position B farther from an object side than the position A is,
   wherein $d_1/d_2$ is greater than 2 and less than 3, where $d_1$, which is the diameter of a circle circumscribing a triangle connecting centers of three of the defocus regions closest to each other, is divided by $d_2$, which is the diameter of the defocus regions.

2. The eyeglass lens according to claim 1,
   wherein the plurality of defocus regions are spaced apart and not adjacent to each other.

3. The eyeglass lens according to claim 1 or 2, further comprising:
   a functional region in which the plurality of defocus regions are arranged in such a manner that the diameters di fall within a range of ±20%.

4. The eyeglass lens according to claim 3,
   wherein in the functional region, an area ratio of the plurality of defocus regions is 30% or more.

5. The eyeglass lens according to any one of claims 1 to 4,
   wherein a surface shape of the plurality of defocus regions is a spherical shape.

6. The eyeglass lens according to any one of claims 1 to 5,
   wherein the eyeglass lens is a hyperopia reducing lens.

7. A design method for an eyeglass lens, comprising the steps of:

   designing a base region configured to cause light incident on an object-side surface to exit from an eye-side surface, enter an eye, and converge at a predetermined position A on a retina; and
   designing a plurality of defocus regions having a characteristic of causing light to converge at a position B farther from an object side than the position A is,
   wherein in the step of designing the plurality of defocus regions, the plurality of defocus regions are designed in such a manner that $d_1/d_2$ is greater than 2 and less than 3, where $d_1$, which is the diameter of a circle circumscribing a triangle connecting centers of three of the defocus regions closest to each other, is divided by $d_2$, which is the diameter of the defocus regions.

FIG. 1

FIG. 2

FIG. 3

FIG. 4

# FIG. 5

(a)

10
20

(b)

10
20

(c)

10
20

(d)

10
20

FIG. 6

(a)

(b)

(c)

(d)

## INTERNATIONAL SEARCH REPORT

| International application No. |
|---|
| **PCT/JP2022/045174** |

**A. CLASSIFICATION OF SUBJECT MATTER**

*G02C 7/02*(2006.01)i; *G02C 7/06*(2006.01)i
FI: G02C7/02; G02C7/06

According to International Patent Classification (IPC) or to both national classification and IPC

**B. FIELDS SEARCHED**

Minimum documentation searched (classification system followed by classification symbols)

G02C1/00-13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/132079 A1 (HOYA LENS THAILAND LTD) 01 July 2021 (2021-07-01) paragraphs [0007], [0011], [0026], [0032]-[0033], [0058], [0063]-[0064], [0093]-[0094], [0100]-[0108], fig. 1 | 1-7 |
| A | JP 2021-5080 A (HOYA LENS THAILAND LTD) 14 January 2021 (2021-01-14) entire text, fig. 1-5 | 1-7 |
| A | WO 2021/181885 A1 (HOYA LENS THAILAND LTD) 16 September 2021 (2021-09-16) entire text, fig. 1-17 | 1-7 |
| A | WO 2020/138127 A1 (HOYA LENS THAILAND LTD) 02 July 2020 (2020-07-02) entire text, fig. 1-19 | 1-7 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/045174**

| Patent document cited in search report | | | Publication date (day/month/year) | Patent family member(s) | | | Publication date (day/month/year) |
|---|---|---|---|---|---|---|---|
| WO | 2021/132079 | A1 | 01 July 2021 | EP | 4083690 | A1 | |
| | | | | paragraphs [0011]-[0012], [0016], [0031], [0039]-[0040], [0071], [0083], [0101]-[0102], [0108], [0116], fig. 1 | | | |
| | | | | CN | 114746802 | A | |
| | | | | JP | 2021-99455 | A | |
| JP | 2021-5080 | A | 14 January 2021 | US | 2022/0155615 | A1 | |
| | | | | entire text, fig. 1-5 | | | |
| | | | | WO | 2020/262568 | A1 | |
| | | | | CN | 113474718 | A | |
| | | | | KR | 10-2021-0131404 | A | |
| WO | 2021/181885 | A1 | 16 September 2021 | EP | 4120007 | A1 | |
| | | | | entire text, fig. 1-17 | | | |
| | | | | KR | 10-2022-0100074 | A | |
| | | | | CN | 115053171 | A | |
| | | | | TW | 202146981 | A | |
| WO | 2020/138127 | A1 | 02 July 2020 | US | 2021/0286195 | A1 | |
| | | | | entire text, fig. 1-19 | | | |
| | | | | EP | 3904948 | A1 | |
| | | | | CN | 113260901 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020067028 A

**Non-patent literature cited in the description**

- **THIBOS LN** ; **HONG X** ; **BRADLEY A** ; **APPLEGATE RA.** Accuracy and precision of objective refraction from wavefront aberrations.. *J Vis.*, 23 April 2004, vol. 4 (4), 329-51